# EUROPEAN PATENT APPLICATION

(11) **EP 0 728 954 A2**
(43) Date of publication of application: **28.08.1996**
(21) Application number: 96301241.4
(22) Date of filing: 23.02.1996
(51) Int. Cl.: F16C 3/06

(54) **Crankshaft, for a reciprocating machine**

(30) Priority: 24.02.1995 GB 9503755
(71) Applicant: Knorr-Bremse Systems for Commercial Vehicles Limited, Kingswood, Bristol BS15 2NL (GB)
(72) Inventor: Durrant, Jeremy James, Longwell Green, Bristol BS15 7DR (GB)
(74) Representative: Turner, Alan Reginald

(57) **Abstract**

The crank-pin (9) and crank webs of the crankshaft (6) of a reciprocating piston type of air compressor are formed with fillets (26,27) between the bearing surface and the webs (22,23) and these fillets have external curved surfaces 29 the radii of curvature (r) of which progressively decrease from a bearing surface 9a towards the respective web crankweb 6a to produce spreading of the stress patterns and improve the safety factor without enlarging the dimensions of the air compressor.

## Description

This invention relates to an improvement for a reciprocating machine.

A reciprocating machine may include a crankshaft rotatably carried in bearings of a crank housing and a connecting member typically a "connection rod" connecting a crank pin of the crankshaft to a reciprocal member such as a piston. The machine may therefore typically comprise an engine, a gas compressor or a pump. If the compression-ratio and/or the diameter of the piston of such a machine is increased stresses to which the connecting member, reciprocal member and crankshaft are subjected also increase and in order to maintain a desired safety factor it may be necessary to suitably enlarge dimensions of the crankshaft especially in the vicinity of points of highest stress.

It has already been proposed to provide a crank-pin portion of a reciprocating machine with an integral radiussing fillet which provides a smooth transition between the working surface of the crank-pin and the adjacent web surface. Typically, this transition involves a cylindrical surface of the crank-pin merging with an annular surface of the crank web at 90° to the crank-pin axis and the radiussing distributes the stresses at an otherwise sharp transition between these two surfaces. A safety factor of two is typically required and one way to maintain such a safety factor concerning the stresses when designing a machine with increased piston area or compression ratio is to increase the radius of the radiussing fillet but this results in an increase of the diameter of the adjacent web portion of the crankshaft. In addition having regard to the throw radius of this web portion when in rotation the crank housing will also need to be suitably larger. The resultant machine therefore has the shortcoming of being larger and heavier since its manufacture will result in an increased material content, and the inability to use already available standard components.

The object of the present invention is to provide an improvement to such a machine which reduces the above shortcomings.

According to the present invention there is provided a reciprocating machine having a housing a rotatable crankshaft journalled for rotation in the housing a connecting member pivotally linking a crank-pin of the crankshaft to a reciprocating member said crank pin providing a bearing surface region connected with a crankweb 6a via a fillet region characterised in that said fillet region has an external curved surface the radius of curvature of which progressively decreases towards said crankweb.

Preferably said fillet region has an elliptical section with its major axis substantially parallel to the crank-pin axis.

In order that the invention may be more clearly understood and readily carried into effect, the same will be further described by way of an example with reference to the accompanying drawing of which:-
- Fig. 1: illustrates a typical twin-cylinder air compressor on a reduced scale
- Fig. 2a: illustrates a fragmental sectional view of a crank-pin and connecting rod for such an air compressor and
- Fig. 2b: illustrates a stress pattern produced in a section such as shown in Fig. 2a.
- Fig. 3a: illustrates an enlarged scale fragment showing a fillet of elliptical section and
- Fig. 3b: illustrates a stress pattern produced in a section such as shown in Fig. 3a.

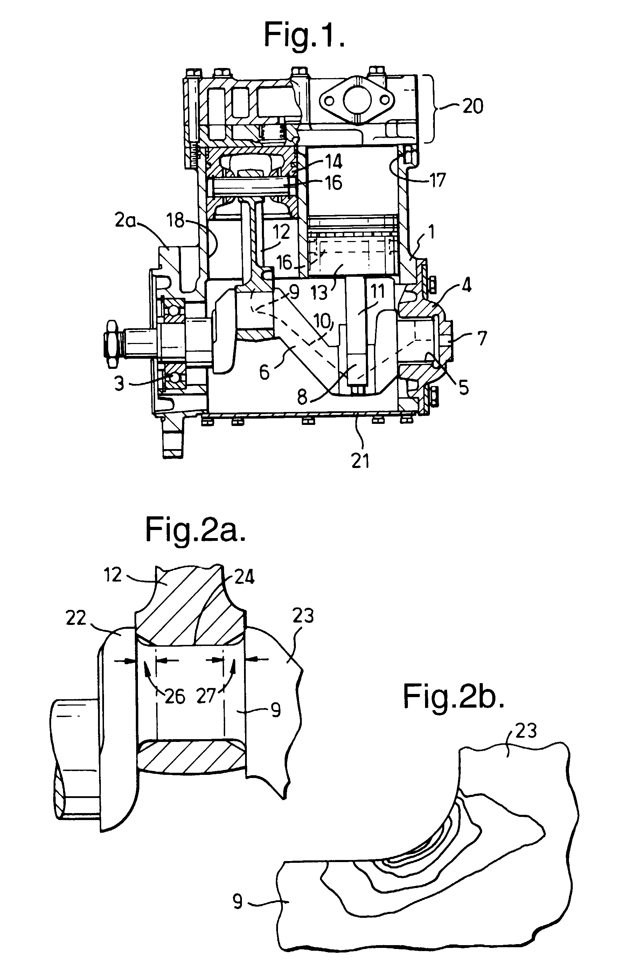

Referring to Fig. 1, the twin cylinder air compressor which is part shown in section and reduced scale therein comprises a combined cast cylinder and crankcase 1 which carries an integral drive-end cover 2 incorporating a mounting flange 2a and a ball-race 3. An open-end cover 4 of the crankcase carries a plane bearing bush 5 for the other end of the crankshaft 6. The crankshaft bearings are lubricated by oil applied under pressure via a port 7 in the end-cover 4 to reach the crank-pins 8 and 9 via oil way 10, shown dotted, in the crankshaft. The crankshaft is a single piece forging or casting with the crank-pins and bearings ground to the desired dimensions. Connecting rods 11 and 12 for pistons 13 and 14 have big-ends assembled to the crank-pins 8 and 9 and small-ends assembled to the pistons 13 and 14 by gudgeon pins 15 and 16. Moreover the pistons 13 and 14 are provided with suitable combinations of piston rings (not shown) providing compression and scraper functions with the bores 17 and 18 of the two cylinders and a cylinder head and valve plate assembly 20 is attached to the cylinders in known manner. These details will not be described further herein except to observe that the inlet and delivery valves are arranged in known manner to receive atmospheric air and deliver compressed air at respective inlet and delivery ports of the head assembly. The crankcase may be provided with a sump plate 21 if desired which permits access for assembly of the connecting rods and pistons to the crankcase and shaft.

The overall dimensions of the compressor of Fig. 1, particularly the crankcase and cylinder 1 thereof are dictated in part by the internal space required for the rotation of the crankshaft and connecting rod assembly. The dimensions of the crankshaft on the other hand are dictated by the safety factors relating to stresses therein and as indicated above, the most critical regions are those in which the crank-pins merge with the crank webs. With the object of enhancing the safety factor for given dimensions or alternatively of minimising dimensions for a given safety factor, the crankshaft of such a machine may be constructed as illustrated in Fig. 2a and Fig. 2b.

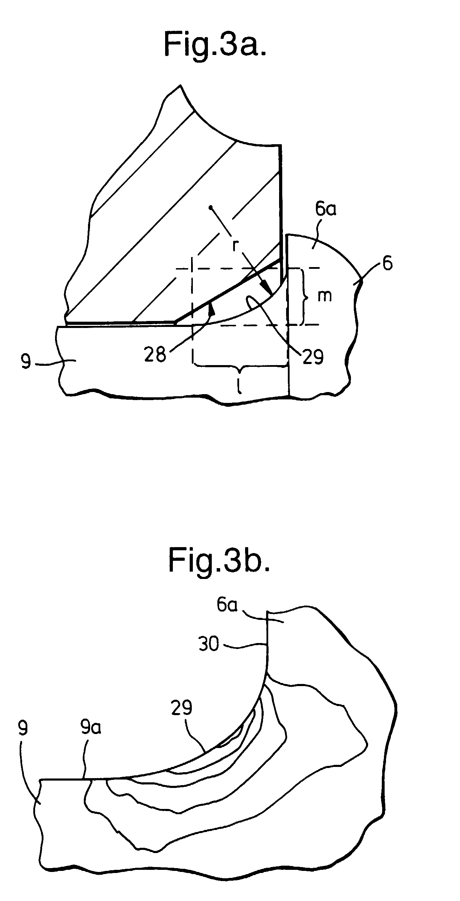

In Fig. 2a, a portion of a crankshaft and connecting rod in the region of one crank-pin is shown on a larger scale joining the drive-end web region 22 and the middle web region 23. Sharp transitions between the parts 9, 22 and 23 are to be avoided to reduce localised stresses. The cylindrical bearing surface 24 of the crank-pin 12 is therefore confined to a middle region of the crank-pin, end regions 26 and 27 being formed as radiussed fillets which make smooth transitions through 90 degrees between the bearing cylindrical surface of the crank-pin and the annular crank web surfaces the planes of which are normal to the crank-pin axis. A typical stress pattern for this is shown in Fig. 2b. The safety factor for such a configuration is increased if the radii of curvature of the external fillet surfaces are increased but such increase can result in the dimensions of the crankshaft being increased to accommodate fillets with such enlarged radii. However in accordance with the present example of the invention, the dimensions of the fillet regions are designed to progressively increase in curvature with the progressively increasing crank-pin diameter towards the web. More particularly, such progressive increase of curvature is achieved by fillets at each end of the crank-pin, one of which is shown at 29 enlarged in Fig. 3a, being formed with elliptical surfaces having major and minor half axes "1" and "m". In this example there is a progressive reduction of the external radius of curvature (such as "r" in Fig. 3a) of the fillet surface towards the crank web 6a, thereby spreading stresses towards the larger diameter end of the fillet. This is illustrated in the typical diagrammatic stress pattern shown in Fig. 3b the surface 29 of the fillet shown is contiguous with the bearing surface 9a of the crank-pin at the major axis and contiguous with the surface 30 of the adjacent crankweb 6a. By such means a correspondingly enhanced safety factor can be achieved as compared with Fig. 2b, without any radial dimensional increase of the crankshaft beyond that which is necessary to accommodate the minor half axial dimension "m". Of course the axial dimension of the connecting rod and crank-pin 9 needs to be sufficient to accommodate the fillets and the annular internal chamfered regions such as 28 (Fig. 3a) which are clear of the fillets.

The Applicant has estimated by way of example that using a typical crankshaft material consisting of an iron alloy such as is known in the United Kingdom as 605M36 of safety factor of 2 is achievable albeit with a reduction of 1.5mm in crank-pin diameter by employing fillets of elliptical form as discussed in the foregoing.

## Claims

1. A reciprocating machine having a housing (1) a rotatable crankshaft (6) journalled for rotation in the housing a connecting member pivotally linking a crank-pin of the crankshaft to a reciprocating member said crank-pin (9) providing a bearing surface region (9a) connected with a crankweb (6a) via a fillet region characterised in that said fillet region has an external curved surface (29) the radius of curvature of which progressively decreases towards said crankweb.

2. A reciprocating machine as claimed in claim 1, characterised in that said external curved surface (29) is a surface of rotation of a part of an ellipse.

3. A reciprocating machine as claimed in claim 2, characterised in that said external curved surface (29) is a surface of rotation of a segment of an ellipse extending between points of its minor and major axes.

4. A reciprocating machine as claimed in claim 3, characterised in that the bearing surface region (9a) and the adjacent surface (30) of said crankweb are respectively contiguous with said external curved surface (29) at said points of the said minor and major axes.
